# EUROPEAN PATENT SPECIFICATION

(11) **EP 1 694 055 B1**
(45) Date of publication and mention of the grant of the patent: **01.11.2017**
(21) Application number: 05003701.9
(22) Date of filing: 21.02.2005
(51) Int. Cl.: H04N 5/21, H03M 1/12

(54) **Method for improving the subjective impression of a digitized image displayed with a low amplitude resolution, and video apparatus for carrying out the method**
Verfahren zur Verbesserung des subjektiven Eindrucks eines mit niedriger Amplitudenauflösung angezeigten digitalisierten Bildes und Videovorrichtung zur Durchführung dieses Verfahrens
Procédé pour améliorer l'impression subjective d'une image numérisée affichée à definition de faible amplitude et dispositif vidéo pour la mise en oeuvre du procédé

(43) Date of publication of application: 23.08.2006
(73) Proprietor: Harman Becker Automotive Systems GmbH, 76307 Karlsbad (DE)
(72) Inventor: Frensch, Jochen, 78052 Villingen-Schwenningen (DE)
(74) Representative: Grünecker Patent- und Rechtsanwälte PartG mbB

(56) References cited:
- EP-A- 1 137 266
- EP-A- 1 322 113
- US-A- 5 525 984
- US-A- 6 040 876
- US-A1- 2005 021 579
- US-B1- 6 448 912
- LAWRENCE GILMAN ROBERTS: "PICTURE CODING USING PSEUDO-RANDOM NOISE" IRE TRANSACTIONS ON INFORMATION THEORY, IEEE INC. NEW YORK, US, vol. IT-8, no. 2, February 1962 (1962-02), pages 145-154, XP008050101

## Description

The present invention relates to a digital signal processing. In particular, it relates to a method and apparatus for improving the subjective quality of an image digitized with a first, higher amplitude resolution and displayed with a second, lower amplitude resolution.

Due to their relatively low cost, liquid crystal displays (LCD) are used in a wide range of applications. They can be found in personal computers, personal digital assistants, television sets, cellular phones, vending machines, camcorders, digital cameras, automobiles and many other appliances. In many cases the displayed picture has an analog origin or is subject to an intermediate analog transmission.

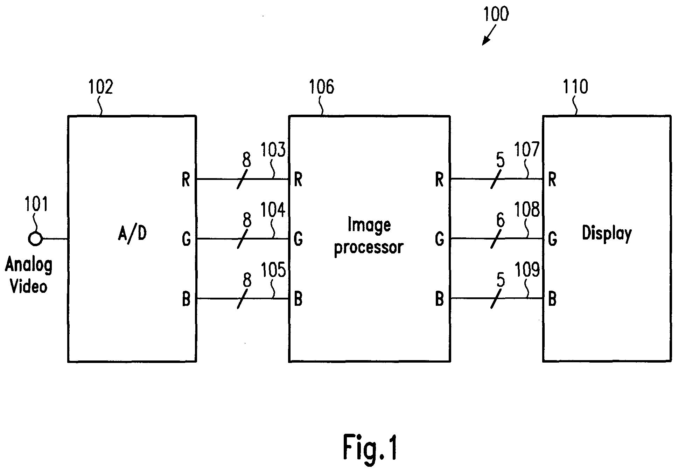

Fig. 1 shows a typical structure to which the present invention is related. A display apparatus 100 comprises an analog-to-digital converter 102, an image processor 106 and a display 110. An analog video signal is applied to analog video input 101. The analog video signal could be a black and white composite signal, a color composite signal, separate red, green and blue (RGB) signals or chrominance and luminance signals. The contents of the analog video signals generally are moving full-video, but in other cases they might also be still pictures like photographs, icons or maps.

A to D converter 102 digitizes the analog video signal with a certain space and amplitude resolution. In case of a composite video signal it also separates synchronization signals and synchronizes to them. For each pixel a digital value is output. In the illustrative example shown in Fig. 1 each digital value has 24 bit with eight bits each for the intensities of the colors red, green and blue. This is symbolized by the three connection lines 103 to 105. The connection is shown here with eight lines per color but it could in general be any digital data connection such as a parallel or serial bus or some other synchronous or asynchronous parallel or serial connection.

Image processor 106 may be implemented in several different ways, such as dedicated hardware assembled on printed circuit board, a dedicated integrated circuit, appropriate software running on a processor like a digital signal processor or configurable integrated logic circuits. One example of a configurable logic circuit is a Field Programmable Gate Array (FPGA). FPGAs may comprise several function blocks like programmable input/output blocks, memory blocks and configurable logic blocks. These functional elements are interconnected by routing channels. An FPGA may be customized by loading configuration data into internal static memory cells. Stored values in these cells determine logic functions and interconnections. Configuration data can be read from an external serial PROM or written into the FPGA from an external master, like a controller. A more detailed description of FPGAs is for example available in "Spartan-II 2.5. VFPGA family: Introduction And Ordering Information", product specification, Xilinx, Incorporated, September 2003. In the master mode, the FPGA reads configuration data from an external computer-readable medium like a mask programmed or non-volatile solid state memory. In the slave mode, an external controller reads configuration data from any computer-readable medium like magnetic disk, magnetic tape, optical disk, printed bar code or any kind of solid state memory and writes it into the FPGA.

One important task of image processor 106 is to interface between A/D converter 102 and display 110, as they may have different data format, different frame rate, different spatial resolution or different amplitude resolution. Image processor 106 may also perform other tasks like switching between a plurality of inputs, providing a graphical user interface or adjusting parameters of the image like brightness or contrast. In the illustrative example of Fig. 1, display 110 has a lower intensity resolution of sixteen bits, five bits each for colors red and blue and six bits for color green.

In such a case, image processor 106 performs a rounding operation which could in the simplest case be a truncation of the two or three least significant bits. As will be explained in the following, this rounding or truncation operation causes a problem deteriorating the perceived quality of the image on the display.

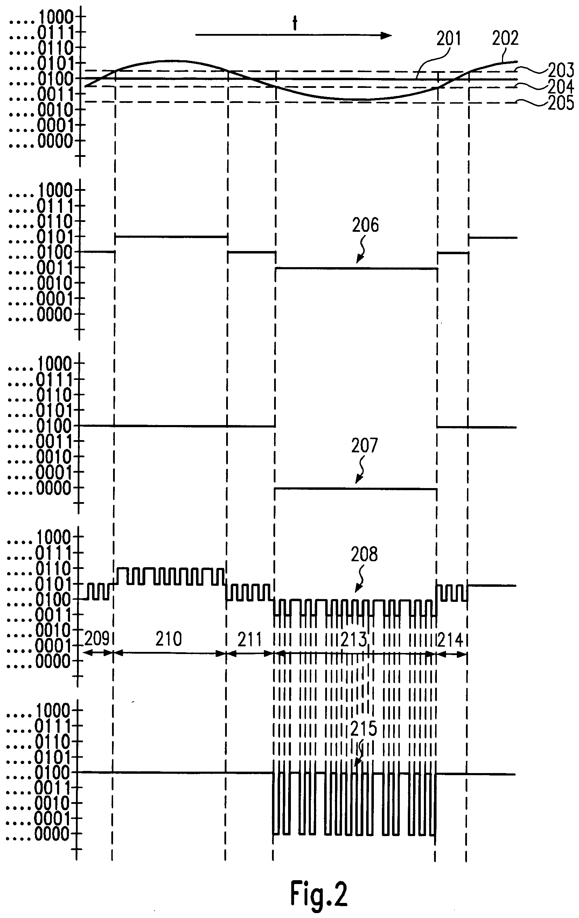

In Fig. 2 an analog video signal 201 is shown, which may be an intensity signal of a black and white video, a luminance signal of a color video or an intensity signal of one of the colors red, green or blue. In the example shown here, the signal is constant over the time period displayed. Such a signal would for example correspond to an area in an image having a uniform color and intensity. Curve 202 shows the same signal superimposed with an interfering periodic signal which could for example be a hum of a power supply. Other possible interference sources are semiconductor drift, irradiation by RF signals or ripple on the power supply from changing load currents. Analog signal 202 is now digitized in the A/D converter having the thresholds shown with dashed lines 203 to 205. The resulting digitized signal is shown in curve 206. Although continuous lines are shown here, it is understood that there are time discrete values corresponding to the pixels of the image. Due to the interferer, the digital signal varies with a peak to peak amplitude of two least significant bits (LSBs). Due to the fine intensity resolution, the step of one LSB would hardly be visible to the human eye.

At the ordinate, the four least significant bits of the digital values are shown. In this example the two least significant bits will be truncated, for example in order to obtain six bit values from eight bit values. The result of this truncating operation is depicted in curve 207. Due to the lower resolution, the step created by the interferer in the truncated signal 207 is eight times as high as with the original digital signal. As a result it produces regions of perceivably different color or intensity in an area of originally uniform color or intensity.

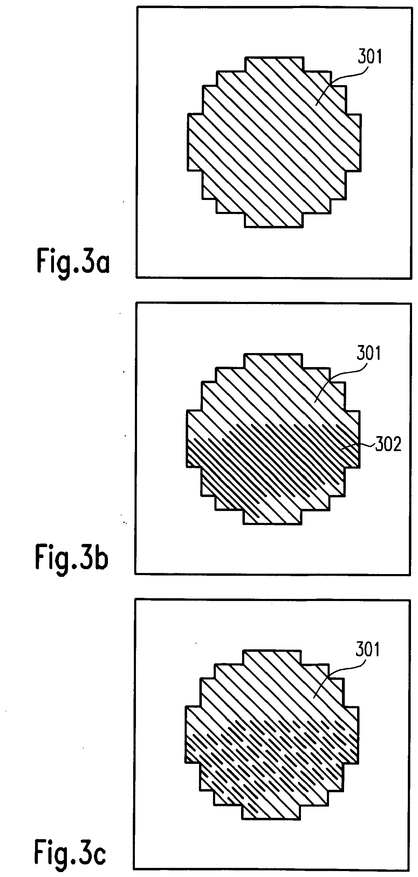

The impression created to the eye of an observer is illustrated in Fig. 3. Fig. 3a shows the original image with a circular area of uniform grey, rastered into pixels. In Fig. 3b the image belonging to curve 207 is shown. It exhibits a contiguous area 302 of perceivably darker color. Depending on the frequency of the interferer, the effect on the image may be a contiguous area, horizontal stripes or even complete areas changing the color shading with time from frame to frame or over a plurality of frames.

As the described effects deteriorate the quality of the displayed image significantly, it is the object of the present invention to provide a method and an apparatus which reduces this effect, resulting in a perceivably improved image quality.

This object is achieved by a method according to claim 1, and by a video display according to claim 14 of the present invention. The perceived quality of the displayed image is improved by adding a digital noise signal to the digital video signal obtained from the A/D converter before rounding or truncation. This provides the advantage that the interference signal does not result in contiguous regions of different color, but the effected region instead shows a randomly rastered intensity without sharp border lines.

The method and video display according to the present invention may advantageously improve the visual appearance of a displayed picture if the video signal is superimposed with an interferer before its amplitude resolution is reduced. As a further advantage, only little additional circuitry or processing power is required. For example, in a field programmable gate array, the present invention may be implemented with a part of the remaining gates being left unused by other functions.

The accompanying drawings are incorporated into and form a part of the specification for the purpose of explaining the principles of the invention. The drawings are not to be construed as limiting the invention to only the illustrated and discrete examples of how the invention can be made and used. Further features and advantages will become apparent from the following in more particular description of the invention, as illustrated in the accompanying drawings wherein
Fig. 1 illustrates an exemplary structure of a display apparatus in which the present invention can be used;
Fig. 2 shows analog and corresponding digital video signals;
Fig. 3 shows the effect of an interferer on an exemplary image according to prior art and according to the present invention;
Fig. 4 shows an exemplary structure of a display apparatus according to one embodiment of the present invention;
Fig. 5 depicts an exemplary structure for an adder for adding the digital noise signal according to an embodiment of the present invention;
Fig. 6 depicts a possibility to generate a digital noise signal according to an embodiment of the present invention;
Fig. 7 shows an exemplary structure according to another embodiment of the present invention.

Referring now to Fig. 2, curve 208 shows the sum of curve 206 with a digital noise signal consisting of values with arbitrary zeros and ones in a least significant bit and all zeros on the other bits. Within portions 209 to 211 and 214 there is no difference to the resulting rounded or truncated curve 215 compared to 207. Only within portion 213 the added noise causes the resulting signal to toggle between two adjacent values.

The result on the displayed image is illustrated in Fig. 3c. Grey area 301 still shows some non-uniform region, but the detrimental effect is widely reduced when compared to Fig. 3b.

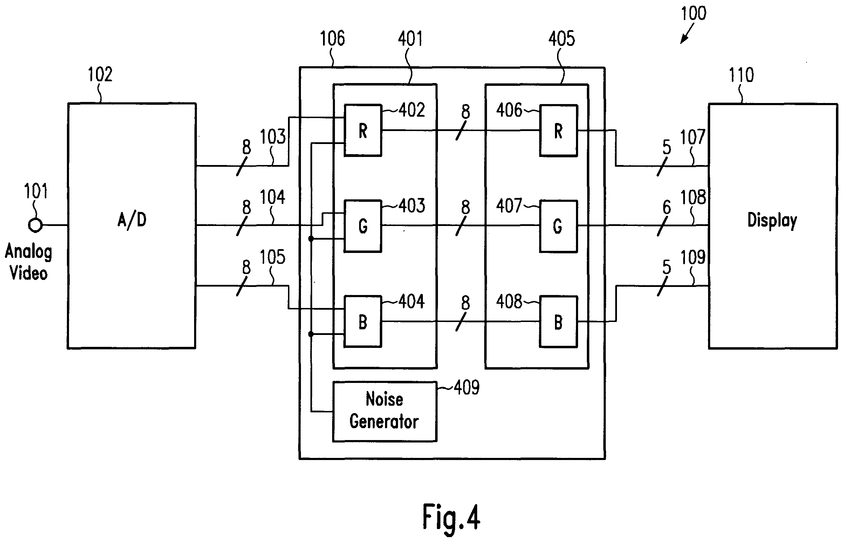

Now with reference to fig. 4 an exemplary structure to carry out the method according to the invention will be explained. Analog video input 101, A/D converter 102 and display 110 are the same as shown in Fig. 1. Image processor 106 now comprises adding means 401, rounding means 405 and a noise generator 409.

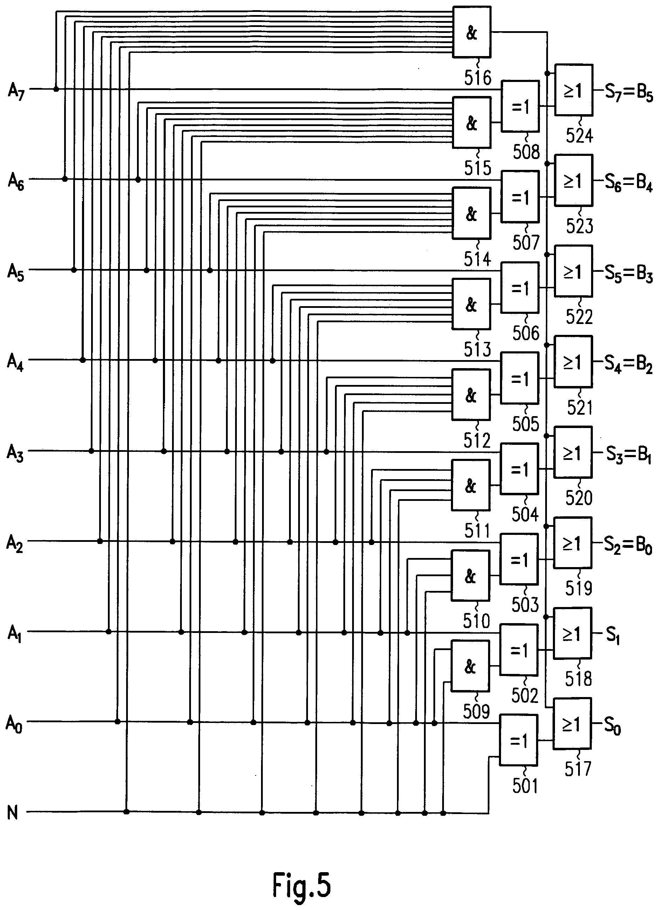

In this exemplary embodiment adding means 401 comprises three adder circuits 402 to 404, one for each color. Such an adder circuit could be an eight bit full adder to which the eight bit intensity signal of one color is connected at one input and the digital noise signal is connected to the least significant bit of the other input. Another possibility is shown in Fig. 5 where the circuitry is specifically adapted to add one bit to an eight bit value. Exclusive OR 501 adds the noise bit to the least significant bit of the video signal. AND-gates 509 to 515 combine the carry signal for all other bits which is added with Exclusive OR gates 502 to 508. AND-gate 516 detects an overflow for the case that the eight bit value of 255 is added with a noise bit of one. In this case the output value is also set to 255 by the OR-gates 517 to 524. This prevents an inversion of the image in the case of an overflow.

Various other implementations for adder circuits 402 to 404 are also possible, e.g. a look-up table with nine address bits and eight bit output data.

Rounding means 405 comprises rounding circuits 406 to 408, one for each color. In one embodiment, rounding is performed by truncating one or more of the least significant bits. Another particular advantageous embodiment is to combine adding means 401 and rounding means 405. In the case of the adder circuit of Fig. 5, gates 501, 502, 509, 517 and 518 could be omitted in the case that the output values are truncated to six bit B₀ to B₅.

Noise generating means 409 provides a digital noise signal with the same clock rate as the digital video signal. The digital noise signal may be a one-bit signal, but it may also have a plurality of valid bits. In order to avoid unwanted distortion on the displayed image, the maximum amplitude of the generated digital noise signal is equal to or smaller than an amplitude value corresponding to the least significant bit of the intensity resolution of the display, i.e. the second, lower resolution.

In an advantageous embodiment, the digital noise signal is a one-bit signal with a value of the bit corresponding to the least significant bit of the first, higher resolution. That is, the noise signal has a peak-to-peak amplitude value equal to the value of the least significant bit of the first, higher resolution.

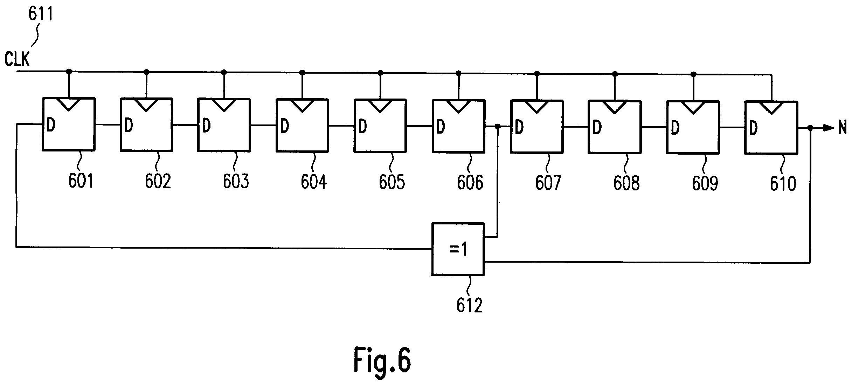

One possible implementation of digital noise generator 409 is depicted in Fig. 6. A shift register comprising a plurality of D-flip-flops 601 to 610 clocked by video word clock 611 together with one or more exclusive OR-gates 612 forms a linear feedback shift register. Such structures are known to generate upon proper configuration a pseudo-random binary sequence which re-occurs after two 2^{m}-1 clock cycles where m is the number of flip-flops in the shift register. If the digital noise signal should comprise more than one bit, other bits can be obtained from other flip-flop outputs. Other noise generating means are conceivable, such as a look-up table addressed by a counter which is in turn clocked by the video word clock. Such an implementation provides the advantage that the noise structure can be synchronized to the frame rate of the video signal resulting in a raster pattern which does not change from frame to frame. This avoids additional motion impression generated in areas of uniform color and intensity of the image. In other cases a smoothing of the noise signal over space and/or time may be desired, which can be obtained by appropriate two dimensional filtering over space or by timewise filtering the noise values for each pixel between subsequent frames. The structure for such digital filters is not depicted, but commonly known standard structures can be applied.

The logic shown in Figs. 5 and 6 may be implemented in dedicated hardware, however, other implementations are possible such as a GAL or Field Programmable Gate Arrays (FPGA).

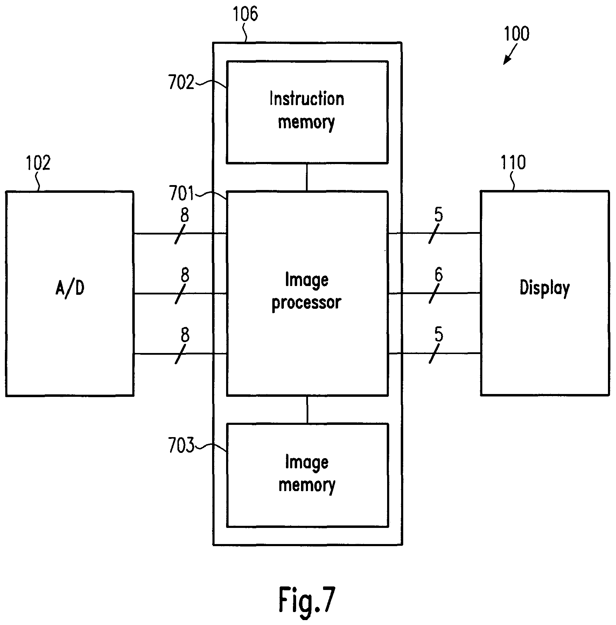

In another embodiment the functions of adding means 401, rounding means 405 and noise generating means 409 may be implemented in software running on a generic processor such as a digital signal processor. An according structure is depicted in Fig. 7. Image processor 106 comprises processor 701, instruction memory 702 and image memory 703. Instruction memory 702 and image memory 703 may be located in the same physical entity. Instructions stored on the instruction memory 702 cause the processor 701 to perform the described addition, rounding and noise generation operations.

Instruction memory 702 may be mask programmed, but it may also be RAM or non-volatile memory like flash or EEPROM, to which the instructions are loaded from any other computer-readable medium like magnetic tape, magnetic disk, optical disk or any solid state memory.

## Claims

1. Method for improving the subjective impression of a digitized image displayed with a low amplitude resolution, comprising the steps of
a) digitizing an analog video signal to obtain a digital video signal with a first amplitude resolution;
b) generating a digital noise signal;
c) adding said digital noise signal to said digital video signal to obtain a sum signal;
**characterized by**
d) reducing an amplitude resolution of said sum signal to obtain a video signal with a second amplitude resolution,
whereby a maximum amplitude of said digital noise signal is equal to or smaller than an amplitude corresponding to a least significant bit of said second resolution.

2. The method according to claim 1, wherein said analog video signal is a full-video image.

3. The method according to claim 1 or 2, wherein said noise signal is a random value obtained for each pixel of each frame independently.

4. The method according to claim 1 or 2, wherein said noise signal is a pseudo-random value.

5. The method according to claim 1 or 2, wherein said noise signal is obtained by choosing random or pseudo-random values for all pixels and subjecting the random or pseudo-random values to spatial digital filtering.

6. The method according to claim 1 or 2, wherein said noise signal is obtained by choosing random or pseudo-random values for all pixels and subjecting the random or pseudo-random values of pixels located at the same position in subsequent frames to digital filtering.

7. The method according to claim 1 or 2, wherein said noise signal is stored for one complete image in a memory, and said stored noise signal is applied to all frames of said video signal.

8. The method according to one of the preceding claims, wherein the noise signal has a peak-to-peak amplitude value equal to the value of the least significant bit of the first amplitude resolution.

9. The method according to one of the preceding claims, wherein the analog video signal is a black and white video signal.

10. The method according to one of the preceding claims, wherein the analog video signal is a colour video signal consisting of intensity signals associated with each of a plurality of colours, and steps a) to d) are applied to at least one of said intensity signals.

11. The method according to one of the claims 1 to 8, wherein the analog video signal is a colour video signal consisting of a luminance signal and a chrominance signal, and steps a) to d) are applied to at least one out of said luminance and chrominance signals.

12. The method according to one of the claims 1 to 8, wherein the analog video signal is a composite video signal.

13. The method according to one of the preceding claims, wherein the second amplitude resolution corresponds to 6 bit or less.

14. A video display (100) comprising
digitizing means (102) for converting an analog video signal into a digital video signal with a first amplitude resolution;
noise generating means (409) for producing a digital noise signal;
adding means (401) for adding said digital video signal and said digital noise signal to obtain a sum signal;
**characterized by**
rounding means (405) for reducing an amplitude resolution of said sum signal to obtain a second digital video signal having a second amplitude resolution; and display means (110) for displaying said second digital video signal,
wherein a maximum amplitude of said digital noise signal is equal to or smaller than an amplitude corresponding to a least significant bit of said second amplitude resolution.

15. A video display (100) according to claim 14, wherein said noise generating means (409), said adding means (401) and said rounding means (405) are comprised in a field-programmable gate array, FPGA.

16. A video display (100) according to claim 14, wherein said noise generating means, said adding means and said rounding means are comprised in a processing unit (106) consisting of
memory (702) for storing said digital video signal;
memory (703) having stored thereon instructions, which, when executed on a processor, cause the processor to perform steps b) to d) of claim 1; and
a processor (701) to programmably execute said instructions.

17. A computer-readable medium, having stored thereon instructions, which, when executed on a processor, cause the processor to perform steps b) to d) of claim 1.

18. A computer-readable medium, having stored thereon configuration data, which, when loaded into a field-programmable gate array, FPGA, configure the field-programmable gate array to comprise the adding means, rounding means and noise generating means of claim 14.

## Patentansprüche

1. Verfahren zur Verbesserung des subjektiven Eindrucks eines mit niedriger Amplitudenauflösung angezeigten digitalisierten Bildes, das die folgenden Schritte umfasst:
a) Digitalisieren eines analogen Videosignals, um ein digitales Videosignal mit einer ersten Amplitudenauflösung zu erhalten;
b) Erzeugen eines digitalen Rauschsignals;
c) Hinzufügen des digitalen Rauschsignals zum digitalen Videosignal, um ein Summensignal zu erhalten;
**gekennzeichnet durch**
d) Reduzieren einer Amplitudenauflösung des Summensignals, um ein Videosignal mit einer zweiten Amplitudenauflösung zu erhalten,
wobei die maximale Amplitude des digitalen Rauschsignals gleich oder kleiner einer Amplitude ist, die einem niedrigstwertigen Bit der zweiten Auflösung entspricht.

2. Verfahren nach Anspruch 1, wobei das analoge Videosignal ein vollständiges Videobild ist.

3. Verfahren nach Anspruch 1 oder 2, wobei das Rauschsignal ein Zufallswert ist, der unabhängig für jedes Pixel jedes Rahmens ermittelt wird.

4. Verfahren nach Anspruch 1 oder 2, wobei das Rauschsignal ein Pseudo-Zufallswert ist.

5. Verfahren nach Anspruch 1 oder 2, wobei das Rauschsignal ermittelt wird, indem Zufalls- oder Pseudo-Zufallswerte für alle Pixel gewählt werden und die Zufalls- oder Pseudozufallswerte einer räumlichen digitalen Filterung unterzogen werden.

6. Verfahren nach Anspruch 1 oder 2, wobei das Rauschsignal ermittelt wird, indem Zufalls- und Pseudo-Zufallswerte für alle Pixel ermittelt werden und die Zufalls- oder Pseudozufallswerte derjenigen Pixel, die sich in den nachfolgenden Rahmen an der gleichen Position befinden, einer digitalen Filterung unterzogen werden.

7. Verfahren nach Anspruch 1 oder 2, wobei das Rauschsignal für ein vollständiges Bild in einem Speicher gespeichert wird und das gespeicherte Rauschsignal auf alle Rahmen des Videosignals angewendet wird.

8. Verfahren nach einem der vorhergehenden Ansprüche, wobei das Rauschsignal einen Spitze-Spitze-Amplitudenwert aufweist, der dem Wert des niedrigstwertigen Bits der ersten Amplitudenauflösung entspricht.

9. Verfahren nach einem der vorhergehenden Ansprüche, wobei das analoge Videosignal ein Schwarz/Weiß-Videosignal ist.

10. Verfahren nach einem der vorhergehenden Ansprüche, wobei das analoge Videosignal ein Farbvideosignal ist, das aus Intensitätssignalen besteht, die jeweils einer von einer Vielzahl von Farben zugeordnet sind, und die Schritte a) bis d) auf mindestens eins der Intensitätssignale angewendet werden.

11. Verfahren nach einem der Ansprüche 1 bis 8, wobei das analoge Videosignal ein Farbvideosignal ist, das aus einem Luminanzsignal und einem Chrominanzsignal besteht, und die Schritte a) bis d) zumindest auf eines von dem Luminanzsignal und Chrominanzsignal angewendet werden.

12. Verfahren nach einem der Ansprüche 1 bis 8, wobei das analoge Videosignal ein zusammengesetztes Videosignal ist.

13. Verfahren nach einem der vorhergehenden Ansprüche, wobei die zweite Amplitudenauflösung 6 Bit oder weniger entspricht.

14. Videoanzeigevorrichtung (100), die Folgendes umfasst:
Digitalisierungsmittel (102) zum Umwandeln eines analogen Videosignals in ein digitales Videosignal mit einer ersten Amplitudenauflösung;
Rauscherzeugungsmittel (409) für das Erzeugen eines digitalen Rauschsignals;
Hinzufügungsmittel (401) für das Hinzufügen des digitalen Videosignals zum digitalen Rauschsignal, um ein Summensignal zu erhalten;
**gekennzeichnet durch**:
Rundungsmittel (405) zum Reduzieren einer Amplitudenauflösung des Summensignals, um ein zweites digitales Videosignal mit einer zweiten Amplitudenauflösung zu erhalten; und
Anzeigemittel (110) zum Anzeigen des zweiten digitalen Videosignals,
wobei eine maximale Amplitude des digitalen Rauschsignals gleich oder kleiner einer Amplitude ist, die dem niedrigstwertigen Bit der zweiten Amplitudenauflösung entspricht.

15. Videoanzeigevorrichtung (100) nach Anspruch 14, wobei das Rauscherzeugungsmittel (409), das Hinzufügungsmittel (401) und das Rundungsmittel (405) in einer feldprogrammierbaren Gatteranordnung, FPGA, zusammengefasst sind.

16. Videoanzeigevorrichtung (100) nach Anspruch 14, wobei das Rauscherzeugungsmittel, das Hinzufügungsmittel und das Rundungsmittel in einer Prozessoreinheit (106) zusammengefasst sind, die aus Folgendem besteht:
Speicher (702) für das Speichern des digitalen Videosignals;
Speicher (703), auf dem Befehle gespeichert sind, die bei Ausführung im Prozessor den Professor dazu veranlassen, die Schritte b) bis d) nach Anspruch 1 durchzuführen; und
einem Prozessor (701), der programmierbar die Befehle ausführt.

17. Computerlesbares Medium, auf dem Befehle gespeichert sind, die bei Ausführung im Prozessor den Prozessor dazu veranlassen, die Schritte b) bis d) nach Anspruch 1 durchzuführen.

18. Computerlesbares Medium, auf dem Konfigurationsdaten gespeichert sind, die beim Laden in die feldprogrammierbare Gatteranordnung, FPGA, die feldprogrammierbare Gatteranordnung dazu konfigurieren, das Hinzufügungsmittel, das Rundungsmittel und das Rauscherzeugungsmittel nach Anspruch 14 zu umfassen.

## Revendications

1. Procédé pour améliorer l'impression subjective d'une image numérisée affichée avec une faible résolution d'amplitude, comprenant les étapes suivantes :
a) la numérisation d'un signal vidéo analogique pour obtenir un signal vidéo numérique avec une première résolution d'amplitude ;
b) la génération d'un signal de bruit numérique ;
c) l'ajout dudit signal de bruit numérique audit signal vidéo numérique pour obtenir un signal somme ;
**caractérisé par**
d) la réduction d'une résolution d'amplitude dudit signal somme pour obtenir un signal vidéo avec une deuxième résolution d'amplitude,
moyennant quoi une amplitude maximale dudit signal de bruit numérique est égale ou inférieure à une amplitude correspondant à un bit de plus faible poids de ladite deuxième résolution.

2. Procédé selon la revendication 1, dans lequel ledit signal vidéo analogique est une image de vidéo complète.

3. Procédé selon la revendication 1 ou 2, dans lequel ledit signal de bruit est une valeur aléatoire obtenue indépendamment pour chaque pixel de chaque trame.

4. Procédé selon la revendication 1 ou 2, dans lequel ledit signal de bruit est une valeur pseudo-aléatoire.

5. Procédé selon la revendication 1 ou 2, dans lequel ledit signal de bruit est obtenu en choisissant des valeurs aléatoires ou pseudo-aléatoires pour tous les pixels et en soumettant les valeurs aléatoires ou pseudo-aléatoires à un filtrage numérique spatial.

6. Procédé selon la revendication 1 ou 2, dans lequel ledit signal de bruit est obtenu en choisissant des valeurs aléatoires ou pseudo-aléatoires pour tous les pixels et en soumettant les valeurs aléatoires ou pseudo-aléatoires de pixels situés dans la même position dans des trames subséquentes à un filtrage numérique.

7. Procédé selon la revendication 1 ou 2, dans lequel ledit signal de bruit est stocké pour une image complète dans une mémoire et ledit signal de bruit stocké est appliqué à toutes les trames dudit signal vidéo.

8. Procédé selon une des revendications précédentes, dans lequel le signal de bruit a une valeur d'amplitude crête-à-crête égale à la valeur du bit de plus faible poids de la première résolution d'amplitude.

9. Procédé selon une des revendications précédentes, dans lequel le signal vidéo analogique est un signal vidéo en noir et blanc.

10. Procédé selon une des revendications précédentes, dans lequel le signal vidéo analogique est un signal vidéo en couleur consistant en signaux d'intensité associés à chacune d'une pluralité de couleurs, et les étapes a) à d) sont appliquées à au moins un desdits signaux d'intensité.

11. Procédé selon une des revendications 1 à 8, dans lequel le signal vidéo analogique est un signal vidéo en couleur consistant en un signal de luminance et un signal de chrominance, et les étapes a) à d) sont appliquées à au moins un desdits signaux de luminance et de chrominance.

12. Procédé selon une des revendications 1 à 8, dans lequel le signal vidéo analogique est un signal vidéo composite.

13. Procédé selon une des revendications précédentes, dans lequel la deuxième résolution d'amplitude correspond à 6 bits ou moins.

14. Dispositif d'affichage vidéo (100) comprenant des moyens de numérisation (102) pour convertir un signal vidéo analogique en un signal vidéo numérique avec une première résolution d'amplitude ;
des moyens de génération de bruit (409) pour produire un signal de bruit numérique ;
des moyens d'addition (401) pour additionner ledit signal vidéo numérique et ledit signal de bruit numérique pour obtenir un signal somme ;
**caractérisé par**
des moyens d'arrondi (405) pour réduire une résolution d'amplitude dudit signal somme pour obtenir un deuxième signal vidéo numérique avec une deuxième résolution d'amplitude ; et des moyens d'affichage (110) pour afficher ledit deuxième signal vidéo numérique,
dans lequel une amplitude maximale dudit signal de bruit numérique est égale ou inférieure à une amplitude correspondant à un bit de plus faible poids de ladite deuxième résolution d'amplitude.

15. Dispositif d'affichage vidéo (100) selon la revendication 14, dans lequel lesdits moyens de génération de bruit (409), lesdits moyens d'addition (401) et lesdits moyens d'arrondi (405) sont compris dans un réseau de portes programmables par l'utilisateur, FPGA.

16. Dispositif d'affichage vidéo (100) selon la revendication 14, dans lequel lesdits moyens de génération de bruit, lesdits moyens d'addition et lesdits moyens d'arrondi sont compris dans une unité de traitement (106) comprenant
une mémoire (702) pour stocker ledit signal vidéo numérique ; une mémoire (703) ayant des instructions stockées dessus qui, quand elles sont exécutées sur un processeur, amènent le processeur à effectuer les étapes b à d) de la revendication 1 ; et
un processeur (701) pour exécuter de manière programmable lesdites instructions.

17. Support lisible par ordinateur ayant des instructions stockées dessus qui, quand elles sont exécutées sur un processeur, amènent le processeur à effectuer les étapes b à d) de la revendication 1.

18. Support lisible par ordinateur ayant des données de configuration stockées dessus qui, quand elles sont elles sont chargées dans un réseau de portes programmables par l'utilisateur, FPGA, configurent le réseau de portes programmables par l'utilisateur pour comprendre les moyens d'addition, les moyens d'arrondi et les moyens de génération de bruit de la revendication 14.
